# EUROPEAN PATENT APPLICATION

(11) **EP 2 018 016 A2**
(43) Date of publication of application: **21.01.2009**
(21) Application number: 08011082.8
(22) Date of filing: 18.06.2008
(51) Int. Cl.: H04L 29/06

(54) **Method and system for formatting returned result from remote processing resource in wireless system**

(30) Priority: 20.07.2007 US 950987 P; 02.01.2008 US 968595
(71) Applicant: Broadcom Corporation, Irvine, CA 92617 (US)
(72) Inventor: Quigley, Thomas, Franklin, VA 28734 (US); Karaoguz, Jeyhan, Irvine, CA 92606 (US); Buer, Mark, Gilbert, AZ 85296 (US); Behzad, Arya, Poway, CA 92064 (UA); Walley, John, Ladera Ranch, CA 92694 (US); MacInnis, Alexander G., Ann Harbour, MI 48104 (US)
(74) Representative: Jehle, Volker Armin

(57) **Abstract**

A result may be formatted after a task is performed in a remote processing resource in a wireless system. A wireless mobile communication (WMC) device may determine a task to be performed at a remote processing resource as part of a job the WMC device is requested to perform. Once the task is performed at the remote processing resource, formatted result is generated. The formatting of the result is based on different factors that may comprise, but not limited to, display limitations at the WMC device, power limitations at the WMC device, processing load/capability at the remote processing resource, and the connectivity limitation between the WMC device and the remote processing resource. Result formatting in such situations as internet searches may comprise generating a virtual webpage at the remote processing resource, and sending a link to this virtual webpage to the WMC device.

## Description

### CROSS-REFERENCE TO RELATED APPLICATIONS/INCORPORATION BY REFERENCE

This patent application makes reference to, claims priority to and claims benefit from United States Provisional Application Serial No. 60/950987 filed on July 20, 2007.

The above stated application is hereby incorporated herein by reference in its entirety.

### FIELD OF THE INVENTION

Certain embodiments of the invention relate to wireless devices. More specifically, certain embodiments of the invention relate to a method and system for formatting returned result from a remote processing resource in wireless system.

### BACKGROUND OF THE INVENTION

The field of wireless communication has seen dramatic growth the last few years. In today's world, most people use their wireless devices for various purposes, business and personal, on a constant and daily basis. Society is truly becoming a wireless one. A lot of wireless solutions have been introduces, and have made tremendous strides into everyday's life.

For example, the use of Wireless Personal Area Networks (WPAN) has been gaining popularity in a great number of applications because of the flexibility and convenience in connectivity they provide. WPAN systems generally replace cumbersome cabling and/or wiring used to connect peripheral devices and/or mobile terminals by providing short distance wireless links that allow connectivity within very narrow spatial limits (typically, a 10-meter range). WPAN may be based on standardized technologies, for example Class 2 Bluetooth (BT) technology. While WPAN may be very beneficial for certain applications, other applications may require larger service areas and/or capabilities.

To satisfy such needs, other technologies have been developed to provide greater wireless service. Wireless Local Area Networks (WLAN) systems may operate within a 100-meter range, for example. In contrast to the WPAN systems, WLAN provide connectivity to devices that are located within a slightly larger geographical area, such as the area covered by a building or a campus, for example. WLAN systems are generally based on specific standards, for example IEEE 802.11 standard specifications, and typically operate within a 100-meter range, and are generally utilized to supplement the communication capacity provided by traditional wired Local Area Networks (LANs) installed in the same geographic area as the WLAN system.

Other forms of wireless solutions have evolved from traditional land-based communication technologies. For instance, cellular phones have become just about an absolute necessity in today's world. While cellular technology was merely intend to add an element of mobility to the traditional telephony service, this technology has grown beyond that initial purpose. Many modern cellular technologies, including such technologies as GSM/GPRS, UMTS, and CDMA2000, incorporate substantial data capabilities. Most of today's cellular services include such features as text messaging, video streaming, web browsing...etc.

Combining various wireless technologies is another trend in the wireless world. For instance, WLAN systems may be operated in conjunction with WPAN systems to provide users with an enhanced overall functionality. For example, Bluetooth technology may be utilized to connect a laptop computer or a handheld wireless terminal to a peripheral device, such as a keyboard, mouse, headphone, and/or printer, while the laptop computer or the handheld wireless terminal is also connected to a campus-wide WLAN network through an access point (AP) located within the building. Also, a lot of cellular technology allow (or intended to all) use of the mobile phone as a form of wireless modem that allows connecting a laptop, for example, to the internet via a cellular network.

In addition to existing wireless technologies, other future solutions are being developed, or may still develop. Mainly such future technologies that may promise improved and increased use of data services.

Devices aimed at taking advantage of the capabilities of wireless networks can be described as wireless mobile communication (WMC) devices. Today's WMC devices may comprise such devices as cellular phones, PDA's, laptops, and/or other devices. Put simply, any device that may be able to take advantage of wireless network(s), especially wherein such device has the ability to communicate back with such network(s), may be thought of a WMC device. But, while these WMC devices have continued to grow in complexity and capability, they still suffer from some significant limitations; especially physical limitations and power.

Just as with other electronic devices, the WMC devices have seen substantial growth in performance capability and speed. However, because WMC devices are typically designed to be carried around, and used on the move, physical limitations remain a major consideration in designing these devices. Consumers generally not only disfavor increases in the size and weight of WMC devices, they may even desire decreases in size and weight to make use of these WMC devices more convenient. Consequently, WMC devices' manufactures generally shy away from putting too many components in these devices. Space is precious, and as such, there is a limit on the amount of processing and storage that can be packed into WMC devices without causing increase in size and weight (or even trying to cut down size and weight). Therefore, despite the general rapid development in the overall electronics industry, WMC devices continued to lag behind other devices.

In addition to physical limitations, power remains another major limitation in WMC devices. A lot of potential functionality and capability remains untapped, stagnated by the power limitations of WMC devices because the battery technology, while seeing dramatic improvement in recent years, has generally been unable to keep with the explosive growth in electronic technology. Therefore, despite all the potential WMC devices promise, a major bottleneck remains in the form of piece of technology that has seen no more than incremental improvements over the last few centuries-i.e., the battery.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for formatting returned result from a remote processing resource in wireless system, substantially as shown in and/or described in connection with at least one of the figures, as set forth more completely in the claims.

According to an aspect, a method is provided for processing in wireless devices, the method comprising:
transferring a task to be performed by a wireless mobile communication device to a remote processing resource; and
receiving from said remote processing resource, a result specifically formatted for said wireless mobile communication device based on current capability and resource availability of said wireless mobile communication device that is communicated between said wireless mobile communication device and said remote processing resource.

Advantageously, said specifically formatted result is based on display capabilities of said wireless mobile communication device.

Advantageously, said specifically formatted result utilizes markup language to make said specifically formatted resulted accessible by said wireless mobile communication device via a link.

Advantageously, said specifically formatted result comprises a local webpage created at said remote processing resource and accessible by said wireless mobile communication device via a web link.

Advantageously, the method comprises determining said task based on connectivity capabilities and/or availability between said wireless mobile communication device and said remote processing resource.

Advantageously, said connectivity capabilities and/or availability between said wireless mobile communication device and said remote processing resource comprise available bandwidth of a wireless link that said wireless mobile communication device utilizes to communicate with said remote processing resource.

Advantageously, said connectivity capabilities and/or availability between said wireless mobile communication device and said remote processing resource comprises available quality of service (QOS) of a wireless link that said wireless mobile communication device utilizes to communicate with said remote processing resource.

Advantageously, the method comprises determining said task based on power capabilities and/or availability in said wireless mobile communication device.

Advantageously, the method comprises determining said task based on processing load and/or capabilities of said remote processing resource.

According to an aspect, a machine-readable storage is provided having stored thereon, a computer program having at least one code section for processing in wireless devices, the at least one code section being executable by a machine for causing the machine to perform steps comprising:
transferring a task to be performed by a wireless mobile communication device to a remote processing resource; and
receiving from said remote processing resource, a result specifically formatted for said wireless mobile communication device based on current capability and resource availability of said wireless mobile communication device that is communicated between said wireless mobile communication device and said remote processing resource.

Advantageously, said specifically formatted result is based on display capabilities of said wireless mobile communication device.

Advantageously, said specifically formatted result utilizes markup language to make said specifically formatted resulted accessible by said wireless mobile communication device via a link.

Advantageously, said specifically formatted result comprises a local webpage created at said remote processing resource and accessible by said wireless mobile communication device via a web link.

Advantageously, said at least one code section comprises code that determines said task based on connectivity capabilities and/or availability between said wireless mobile communication device and said remote processing resource.

Advantageously, said connectivity capabilities and/or availability between said wireless mobile communication device and said remote processing resource comprise available bandwidth of a wireless link that said wireless mobile communication device utilizes to communicate with said remote processing resource.

Advantageously, said connectivity capabilities and/or availability between said wireless mobile communication device and said remote processing resource comprises available quality of service (QOS) of a wireless link that said wireless mobile communication device utilizes to communicate with said remote processing resource. Advantageously, said at least one code section comprises code that determines said task based on power capabilities and/or availability in said wireless mobile communication device.

Advantageously, said at least one code section comprises code that determines said task based on processing load and/or capabilities of said remote processing resource.

According to an aspect, a system is provided for processing in wireless devices, the system comprising:
at least one processor in a wireless mobile communication device that enables transferring of a task to be performed by said wireless mobile communication device to a remote processing resource; and
said at least one processor enables receiving from said remote processing resource, a result specifically formatted for said wireless mobile communication device based on current capability and resource availability of said wireless mobile communication device that is communicated between said wireless mobile communication device and said remote processing resource.

Advantageously, said specifically formatted result is based on display capabilities of said wireless mobile communication device.

Advantageously, said specifically formatted result utilizes markup language to make said specifically formatted resulted accessible by said wireless mobile communication device via a link.

Advantageously, said specifically formatted result comprises a local webpage created at said remote processing resource and accessible by said wireless mobile communication device via a web link.

Advantageously, said at least one processor enables determining said task based on connectivity capabilities and/or availability between said wireless mobile communication device and said remote processing resource.

Advantageously, said connectivity capabilities and/or availability between said wireless mobile communication device and said remote processing resource comprise available bandwidth of a wireless link that said wireless mobile communication device utilizes to communicate with said remote processing resource.

Advantageously, said connectivity capabilities and/or availability between said wireless mobile communication device and said remote processing resource comprises available quality of service (QOS) of a wireless link that said wireless mobile communication device utilizes to communicate with said remote processing resource.

Advantageously, said at least one processor enables determining said task based on power capabilities and/or availability in said wireless mobile communication device.

Advantageously, said at least one processor enables determining said task based on processing load and/or capabilities of said remote processing resource.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram that illustrates an exemplary communication setup between a wireless mobile communication (WMC) device and a remote processing resource, in connection with an embodiment of the invention.

FIG. 2A is a block diagram that illustrates an exemplary model for setup that includes a wireless mobile communication (WMC) device and a remote processing resource, in connection with an embodiment of the invention.

FIG. 2B is a block diagram that illustrates an exemplary model for setup that includes a wireless mobile communication (WMC) device communicating directly via a wireless connection with a remote processing resource, in connection with an embodiment of the invention.

FIG. 2C is a block diagram that illustrates an exemplary model for setup that includes a wireless mobile communication (WMC) communicating directly with a remote processing resource that is connected to the same wireless network, in connection with an embodiment of the invention.

FIG. 3 is a flow diagram that illustrates a formatted result generation between a wireless mobile communication (WMC) device and a remote processing resource, in accordance with an embodiment of the invention.

FIG. 4 is a flow diagram that illustrates an exemplary application of formatted result generation between a wireless mobile communication (WMC) device and a remote processing resource, in accordance with an embodiment of the invention.

### DETAILED DESCRIPTION OF THE INVENTION

Certain embodiments of the invention may be found in a method and system for formatting returned result from a remote processing resource in wireless system. Exemplary aspects of method and system for formatting returned result from remote processing resource in wireless system may comprise evaluating a job that a wireless mobile communication device may be requested to do to determine if any tasks pertaining to the requested job may be performed remotely on other devices. Wireless devices typically have limited power supply compared to non-mobile devices; typically in the form of rechargeable battery. Also, wireless devices generally have less processing and storing capabilities then non-personal mobile devices due to physical limitations, which are generally dictated by customer convenience that necessitates keeping such devices light and small. Because of the wireless devices' limited power supply, and because wireless devices still have less processing and storing capabilities; it is desirable to try to use the wireless connectivity abilities of the WMC device to assign some of its tasks to some remote processing resources that may not be subject to similar power restraints, and which may possess increased processing and storage capabilities.

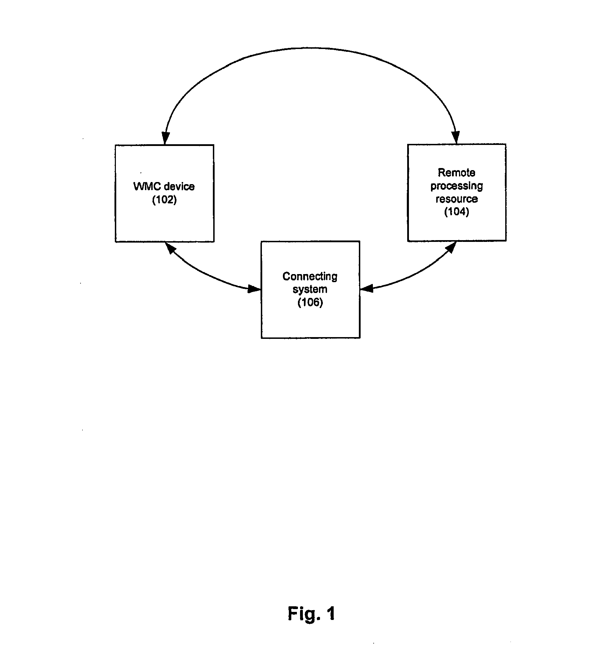

FIG. 1 is a block diagram that illustrates an exemplary communication setup between a wireless mobile communication (WMC) device and a remote processing resource, in connection with an embodiment of the invention. Referring to FIG. 1, there is shown the wireless mobile communication (WMC) device 102, the remote processing resource 104, and a connecting system 106.

The WMC device 102 may comprise suitable hardware, logic, circuitry and/or code that may enable performing wireless mobile communication. The WMC device 102 may perform additional functionality including, but not limited to, internet browsing, video streaming...etc.

The remote processing resource 104 may comprise suitable hardware, logic, circuitry and/or code that may be enabled to communicate to with the WMC device 102. The invention may not be limited to a specific remote processing resource, but may comprise for example, a general purpose processing device, a specialized processing device, a specialized peripheral device, or any combination of suitable hardware, firmware, software and/or code, which may be enabled to perform a job requested by the WMC device 102. For example, the remote processing resource may comprise a home PC that may comprise fast processing subsystems and increased memory space. Such home PC may be better suited to perform processing and/or storage intensive tasks. For instance, where necessary and/or feasible, the WMC device 102 may utilize the remote processing resource 104 to perform Internet searches and/or for secure storage of data that may be created and/or maintained in the WMC device 102.

The connecting system 106 may comprise a plurality of interconnecting networks and suitable hardware, logic, circuitry and/or code that may be enabled to facilitate end-to-end communication between the WMC device 102 and the remote processing resource 104. The connecting system 106 may comprise wireless and/or wired networks that may be enabled to communicate and forward messaging and/or data between the WMC device 102 and the remote processing resource 104.

In operation, the WMC device 102 may communicate directly with the remote processing resource 104 if the devices were enabled to communicate directly, or the WMC device may communicate with the remote processing resource 104 through the connecting system 106. The WMC device 102 may be requested to perform a job. For example, a user may attempt to execute an internet search and/or database sorting on the WMC device 102. The WMC device may communicate to the remote processing resource 104 formatting preferences for expected result or results of task or tasks to be performed in the remote processing resource 104. The formatting preferences may be related to the capabilities of and/or characteristics of the WMC device 102. For example, where the WMC device delegates an internet search to the remote processing resource 104, the WMC device 102 may specify formatting preferences that are optimal to the display capabilities of the WMC device 102. The formatting preferences for expected result or results of task or tasks to be performed in the remote processing resource 104 may be communicated from the WMC device 102 to the remote processing resource 104 either directly or via the connecting system 106. The formatted results may be communicated back to the WMC device 102 from the remote processing resource 104 either directly or via the connecting system 106.

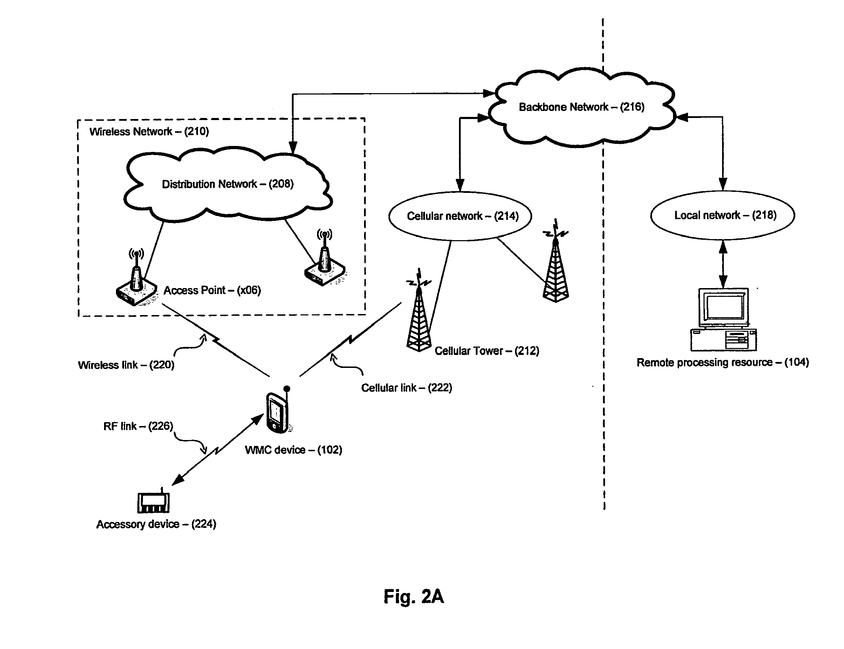

FIG. 2A is a block diagram that illustrates an exemplary model for setup that includes a wireless mobile communication (WMC) device and a remote processing resource, in connection with an embodiment of the invention. Referring to FIG. 2A, there is shown the WMC device 102, the remote processing resource 104, an access point 206, a distribution network 208, a wireless network 210, a cellular tower 212, a cellular network 214, a backbone network 216, a local network 218, a wireless link 220, a cellular link 222, an accessory device 224, and a RF link 226.

The wireless network 210 may comprise a plurality of the access point 206, the distribution network 208 and suitable hardware, logic, circuitry and/or code that may enable implementing a functional block corresponding to a wireless technology. Exemplary wireless technology may comprise for example the IEEE 802.11 (WLAN) or WiMax (802.16) architecture. The access point 206 may comprise suitable hardware, logic, circuitry, and/or code that may be utilized as access point necessary for the WMC device 102 to access the wireless network 210. The distribution network 208 may comprise suitable hardware, logic, circuitry, and/or code that may be adapted to operate as a backbone network that may be responsible for transport and link functionality for plurality of access points in the wireless network 210.

The cellular network 214 may comprise plurality of the cellular tower 212, and suitable hardware, logic, circuitry and/or code that may enable implementing a functional block corresponding to a cellular technology. Exemplary cellular technology may comprise cellular technologies that enable data services, including but not limited to, CDMA, WCDMA, CDMA2000, HSDPA, GSM, GPRS, EDGE, and UMTS.

The accessory device 224 may comprise suitable hardware, logic, circuitry and/or code that may enable performing some accessory functionality in conjunction with the use of the WMC device 102. For example, the accessory device may comprise a hands-free headset. The WMC device 102 may interact with the accessory device 224 over a short-range RF link 226. The RF link 226 may be based on a standardized technology for inter-device short range communication. For example, the RF link may correspond to a Bluetooth® connection or Zigbee connection between the accessory device 224 and the WMC device 102.

The local network 218 may comprise suitable hardware, logic, circuitry and/or code that may enable local connectivity. This local connectivity may comprise use of Local Area Network (LAN) technologies that enable data services, including but not limited to, IEEE 802.3 Ethernet.

The backbone network 216 may comprise suitable hardware, logic, circuitry, and/or code that may be adapted to provide overall system connectivity between sub-networks. The wired network 216 may be enabled to interact with, and connect different wired and wireless technologies. For example, the backbone network may comprise a standard telephony network that may enable data connectivity between different interface nodes linking wired and/or wireless networks comprising WLAN networks, WiMax networks, cellular networks, and/or LAN networks.

The backbone network 216 may comprise suitable hardware, logic, circuitry, and/or code that may be adapted to provide overall system connectivity between sub-networks. The wired network 216 may be enabled to interact with, and connect different wired and wireless technologies. For example, the backbone network may comprise a standard telephony network that may enable data connectivity between different interface nodes linking wired and/or wireless networks including WLAN networks, cellular networks, and LAN networks.

In operation, the WMC device 102 may communicate to the remote processing resource 104 formatting preferences for expected result or results of task or tasks to be performed in the remote processing resource 104 and may receive from the remote processing resource 104 the formatted result or results of performing said task or tasks substantially as described in FIG. 1. The WMC device 102 may utilize a wireless link 220 to access the wireless network 210 via the access point 206. The WMC device 102 may also utilize the cellular link 222 to access the cellular network 214 via the cellular tower 212. The WMC device 102 may attempt to communicate with the remote processing resource 104 via the wireless network 210 through the access point 206 and the distribution network 208. The distribution network 208 may enable forwarding messaging and/or data sent from, and to the WMC device 102. The backbone network 216 enables connectivity between local networks, for example wireless network 210, and cellular network 214. The remote processing resource 104 may receive communication from the WMC device 102 by interacting with the backbone network 216. Necessary protocol-based operations may be performed to facilitate the transmission of information through all the different components. This may comprise use of such protocols as IP, SS7...etc.

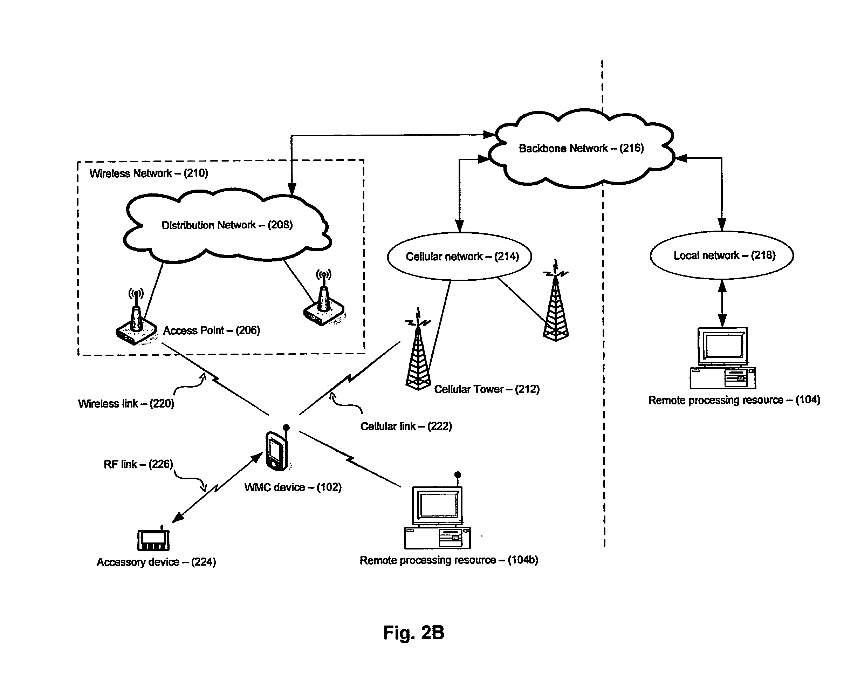

FIG. 2B is a block diagram that illustrates an exemplary model for setup that includes a wireless mobile communication (WMC) device communicating directly via a wireless connection with a remote processing resource, in connection with an embodiment of the invention. Referring to FIG. 2B, there is shown the WMC device 102, the remote processing resource 104, the access point 206, the distribution network 208, the wireless network 210, the cellular tower 212, the cellular network 214, the backbone network 216, the accessory device 224, the RF link 226, and a remote processing resource 104b.

The remote processing resource 104b may be comprised similar to the remote processing resource 104; however, the remote processing resource 104b may also comprise suitable hardware, logic, circuitry, and/or code that may enable wireless connectivity.

In operation, the WMC device 102 may utilize the remote processing resource 104 substantially as described in FIG. 2A. Additionally, the WMC device 102 may communicate directly to the remote processing resource 104b formatting preferences for expected result or results of task or tasks to be performed in the remote processing resource 104b. The WMC device 102 may also receive directly from the remote processing resource 104b the formatted result or results substantially as described in FIG. 1. The remote processing resource 104b may operate similar to the remote processing resource 104; however, the WMC device 102 may communicate directly with the remote processing resource 104b over a wireless connection. The remote processing resource 104b may be operated as a stand-alone device, or it may be operated within a compatible network, wherein the remote processing resource may be integrated.

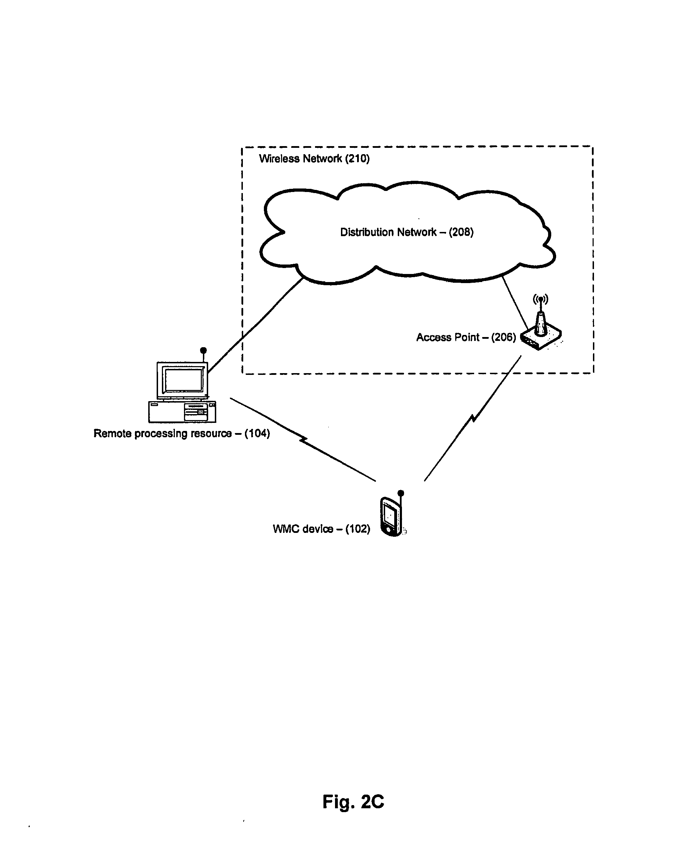

FIG. 2C is a block diagram that illustrates an exemplary model for setup that includes a wireless mobile communication (WMC) communicating directly with a remote processing resource that is connected to the same wireless network. Referring to FIG. 2C, there is shown the wireless mobile communication (WMC) device 202, the access point 206, the distribution network 208, the wireless network 210, and the remote processing resource 104b.

In operation, the WMC device 102 may utilize the remote processing resource 104b substantially as described in FIG. 2B. The WMC device 102 may communicate directly with the remote processing resource 104b over a wireless connection. Additionally, The WMC device 102 may also communicate with the remote processing resource 104b via the wireless network 210 by accessing the distribution network 208 through the access point 206.

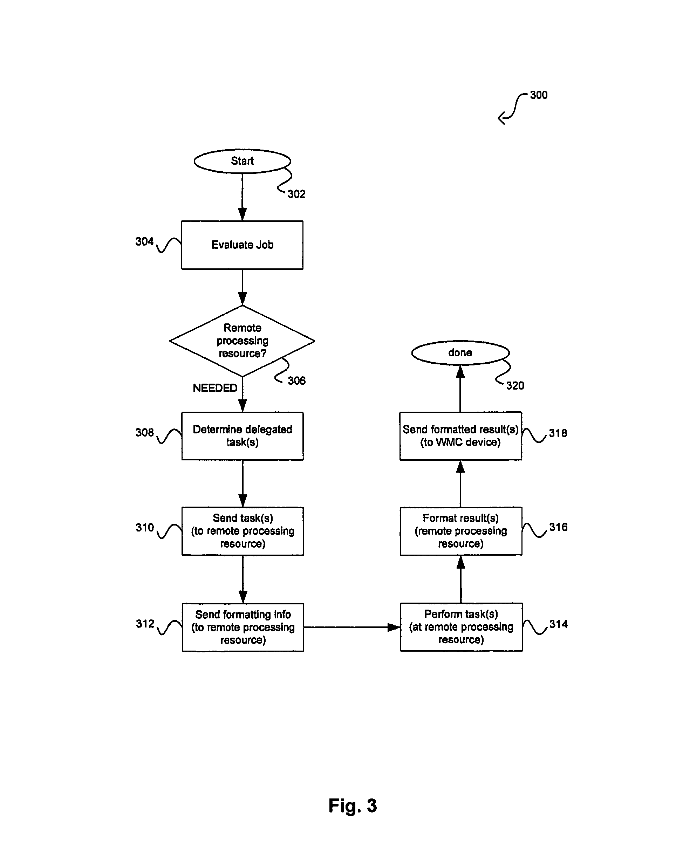

FIG. 3 is a flow diagram that illustrates a formatted result generation between a wireless mobile communication (WMC) device and a remote processing resource, in accordance with an embodiment of the invention. Referring to FIG. 3, there is shown a flow chart 300. In step 302, a job is requested in the WMC device 102. In 304, a job evaluation may be performed in the WMC device 102. This includes analyzing the requested job to determine any task or tasks that may be performed to complete the requested job. In step 306, a determination whether the remote processing resources 104 is needed may be performed. If it is determined that the remote processing resources is needed, the process may proceed to step 308. In step 308, the WMC device 102 determines task or tasks that may be delegated to the remote processing resource 104. This determination may comprise different factors relating to the performance of the task or tasks. For example, operations that the remote processing resource 104 may be better suited to perform may be delegated to the remote processing resource 104. This may comprise, for example, such processing-intensive tasks as internet searches similar to the types performed on such search engines as Yahoo® and/or Google®. In step 310, the determined task or tasks may be sent to the remote processing resource 104. In step 312, the WMC device 102 may also communicate to the remote processing resource 104 formatting preferences for expected result or results of the task or tasks to be performed in the remote processing resource 104. The formatting preferences may be related to the capabilities of and/or characteristics of the WMC device 102, the remote processing resource 104, and/or the connectivity between the WMC device 102 and the remote processing resource 104.

In step 314, the remote processing resource 104 may perform the requested task or tasks. In step 316, the result or results of the performed task or tasks may be formatted according to the specified formatting preferences. For example, with internet searches, the outcome of such searches may be large, and may not be optimal for the WMC device 102 for various reasons. These reasons may comprise such factors as display limitations on the WMC device 102 because WMC devices typically have lower display capabilities than display-specific devices such as TV or monitors. The formatting may comprise, for example, generating a local (virtual) webpage that is optimized in conformity with display limitations and/or capabilities of the WMC device 102, and creating a web (hyper) link to such webpage. In step 318, the formatted result or results may be communicated to the WMC device 102 from the remote processing device 104. This may comprise, in the previous example, sending the web link to the generated webpage. In step 320, the WMC device 102 may utilize the formatted result while performing the requested job. For example, the WMC device 102 may allow a user to access the generated webpage via the received web link.

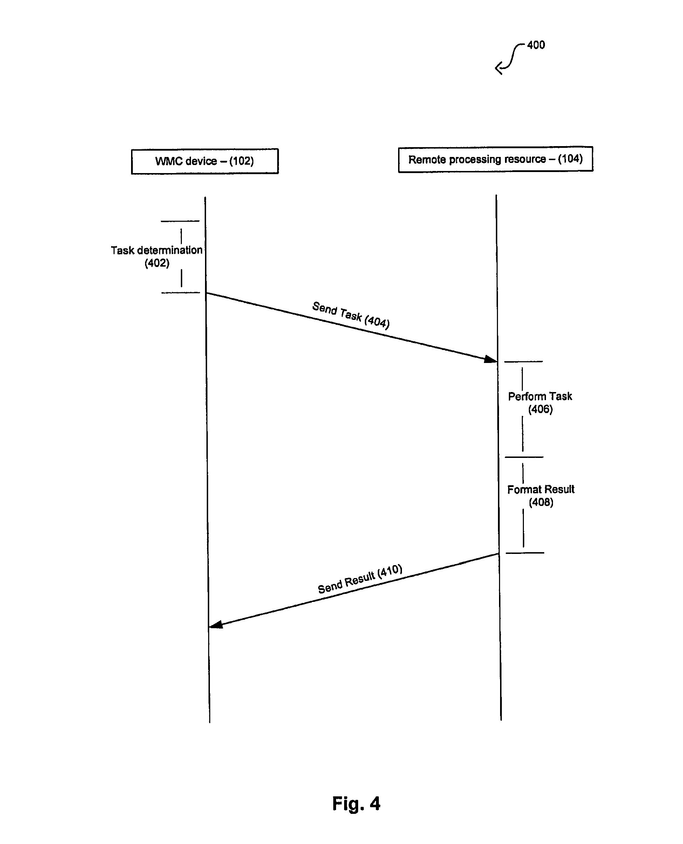

FIG. 4 is a flow diagram that illustrates an exemplary application of formatted result generation between a wireless mobile communication (WMC) device and a remote processing resource, in accordance with an embodiment of the invention. Referring to FIG. 4, there is shown a chronological flow chart 400. In step 402, a task determination is performed in the WMC device 102 as described in 308. In step 404, the determined task is sent from the WMC device 102 to the remote processing resource 104. In step 406, the remote processing resource 104 may perform the requested task. In step 408, the remote processing resource 104 formats the result of the performing the requested task as described in 314. In step 410, the remote processing resource 104 sends the formatted result to the WMC device 102.

Various embodiments of the invention may comprise a method and system for formatting returned result from remote processing resource in wireless system. A wireless mobile communication (WMC) device 102 may determine a task to be performed at a remote processing resource 104 as part of a job the WMC device 102 is requested to perform. Once the task is performed at the remote processing resource, formatted result is generated. The formatting of the result may be based on various factors that may comprise, but not limited to, display limitations at the WMC device 102, power limitations at the WMC device 102, processing load/capability at the remote processing resource 104, and the connectivity limitation between the WMC device 102 and the remote processing resource 104. Result formatting in such situations as internet searches may comprise generating a virtual webpage at the remote processing resource 104, and sending a link to this virtual webpage to the WMC device 102.

Another embodiment of the invention may provide a machine-readable storage, having stored thereon, a computer program having at least one code section executable by a machine, thereby causing the machine to perform the steps as described herein for establishing a connection outside a mesh by including network connectivity information in router configuration messages.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing in wireless devices, the method comprising:
transferring a task to be performed by a wireless mobile communication device to a remote processing resource; and
receiving from said remote processing resource, a result specifically formatted for said wireless mobile communication device based on current capability and resource availability of said wireless mobile communication device that is communicated between said wireless mobile communication device and said remote processing resource.

2. The method according to claim 1, wherein said specifically formatted result is based on display capabilities of said wireless mobile communication device.

3. The method according to claim 1, wherein said specifically formatted result utilizes markup language to make said specifically formatted resulted accessible by said wireless mobile communication device via a link.

4. The method according to claim 1, wherein said specifically formatted result comprises a local webpage created at said remote processing resource and accessible by said wireless mobile communication device via a web link.

5. The method according to claim 1, comprising determining said task based on connectivity capabilities and/or availability between said wireless mobile communication device and said remote processing resource.

6. A machine-readable storage having stored thereon, a computer program having at least one code section for processing in wireless devices, the at least one code section being executable by a machine for causing the machine to perform steps comprising:
transferring a task to be performed by a wireless mobile communication device to a remote processing resource; and
receiving from said remote processing resource, a result specifically formatted for said wireless mobile communication device based on current capability and resource availability of said wireless mobile communication device that is communicated between said wireless mobile communication device and said remote processing resource.

7. The machine-readable storage according to claim 6, wherein said specifically formatted result is based on display capabilities of said wireless mobile communication device.

8. A system for processing in wireless devices, the system comprising:
at least one processor in a wireless mobile communication device that enables transferring of a task to be performed by said wireless mobile communication device to a remote processing resource; and
said at least one processor enables receiving from said remote processing resource, a result specifically formatted for said wireless mobile communication device based on current capability and resource availability of said wireless mobile communication device that is communicated between said wireless mobile communication device and said remote processing resource.

9. The system according to claim 8, wherein said specifically formatted result is based on display capabilities of said wireless mobile communication device.

10. The system according to claim 8, wherein said specifically formatted result utilizes markup language to make said specifically formatted resulted accessible by said wireless mobile communication device via a link.
